# EUROPEAN PATENT SPECIFICATION

(11) **EP 2 099 675 B1**
(45) Date of publication and mention of the grant of the patent: **02.03.2011**
(21) Application number: 08701419.7
(22) Date of filing: 11.01.2008
(51) Int. Cl.: B64C 1/20, B64D 11/06

(54) **COATING OF AN AIRCRAFT SEAT MOUNTING RAIL OR A AIRCRAFT SEAT STUD**
BESCHICHTUNG EINER FLUGZEUGSITZ-MONTAGESCHIENE ODER EINES FLUGZEUGSITZBOLZENS
REVÊTEMENT D'UN RAIL DE MONTAGE DE SIÈGE D'AVION OU D'UN GOUJON DE SIÈGE D'AVION

(30) Priority: 12.01.2007 DE 102007001806; 12.01.2007 US 880110 P
(43) Date of publication of application: 16.09.2009
(73) Proprietor: Airbus Operations GmbH, 21129 Hamburg (DE)
(72) Inventor: SUPAN, Michael, 21635 Jork (DE); HOMANN, Jens-Peter, 22549 Hamburg (DE); MERHOF, Carsten, 21629 Rübcke (DE); DRAACK, Thorsten, 21279 Drestedt (DE)
(74) Representative: Maiwald Patentanwalts GmbH
(86) International application number: PCT/EP2008/050274
(87) International publication number: WO 2008/084089

(56) References cited:
- GB-A- 923 842
- GB-A- 1 153 823
- GB-A- 1 247 734
- JP-A- 7 160 060
- US-A1- 2006 197 364
- US-A1- 2006 237 985

## Description

### Field of the invention

The present invention relates to a mounting rail and an aircraft seat stud for mounting installations in an aircraft, and in particular to an aircraft seat mounting rail and an aircraft seat stud that is at least partly coated with a coating comprising a coating material.

### Background to the invention

When configuring and reconfiguring cabin installations it is necessary to move not only seats or seat units but also other installations into the cabin space in a certain order, because any subsequent changing-around of the components, in particular of the seat units, some of which comprise several seats, will not be possible without further ado. The inadequate space remaining above already installed units is a substantial obstacle to moving to the corresponding place of installation the units that have to be brought in or that have to be removed from said place of installation. Therefore, up to now, the seat units have been moved through particular doors into the aeroplane or the aircraft, with said seat units having been arranged in a particular order prior to installation so as to avoid subsequent changeover or displacement of the components. In concrete terms, in such an installation of for example, seats or seat rows, for example two persons carry the seat to be put into place through the aircraft right up to the required seat position. In this process the first seat is carried to the first position within the aircraft. For reasons of space, all the other seats are placed closely together so that all the seats can be carried into the aircraft. The seats are only aligned after all the seats have been brought into the aircraft. In this process the seat that was brought in last is placed into the first position or seat row. Aligning the seats takes place in the opposite order to the carrying-in of the seats. In this arrangement, due to the dimensions and the weight, as a rule it requires two persons to carry and place the seats. Due to the characteristics of the surface and of the material, the aluminium alloys used in aircraft engineering for mounting rails and an aircraft seat studs and mounting feet (fittings) have a high coefficient of friction, and consequently the surfaces of aluminium mounting rails or aluminium seat rails used in the state of the art are not suitable for sliding the scats within the mounting rail.

### Summary of the invention

It can be regarded as an object of the present invention to provide an aircraft seat mounting rail and an aircraft seat stud that makes it easier to slide fittings, for example of seats or seat units, within the mounting rail.

It can be regarded as a further object of the present invention to provide an aircraft seat mounting rail and an aircraft seat stud that makes it easier to provide a energy supply or signal transmission, for example of seats or seat units.

The object of the present invention is met by the independent claims, wherein advantageous embodiments are provided in the dependent claims.

According to an exemplary embodiment of the invention, a mounting rail is provided that is designed for mounting installations in an aircraft, wherein the mounting rail is at least in part coated with a coating made of a coating material, wherein the coefficient of friction between the coating material and a material of an element to be mounted is lower than the coefficient of friction between a material from which the non-coated mounting rail is made and a material of an element to be mounted.

In this way it becomes possible to slide the elements, which are installed in the mounting rails, for example seats or seat elements (groups of seats) or their fittings, in the mounting rail, a process which was not possible up to now due to the materials used in aircraft construction. For example, it is now possible for one person to slide seat rows that up to now were brought into the aircraft in a particular order to the corresponding position, while according to prior art this process required two or several persons because the seats or seat rows had to be carried.

According to an exemplary embodiment of the invention, the coating material comprises a fluorocarbon polymer.

According to a further exemplary embodiment of the invention, the coating material comprises polytetrafluoroethylene.

Fluorocarbon polymers, and in particular polytetrafluoroethylene, have particular characteristics as far as their mechanical durability, temperature resistance and coefficients of friction are concerned, which characteristics are, for example, known from the coating of kitchen pots and pans. It has been recognized that these materials are also suitable for coating mounting rails that are designed for mounting installations in aircraft, and that comprise adequate durability over the service life. According to an exemplary embodiment of the invention, the coating material comprises a binding resin.

The binding resin leads to improved curing and mechanical stability of the coating.

According to an exemplary embodiment of the invention, the coating comprises a coating thickness of between 10 µm and 100 µm, preferably of approximately 40 µm.

It has been shown that a minimum coating of 10 µm is necessary to apply a durable coating to the mounting rail, which coating is able to withstand the loads experienced during installation or during configuration or reconfiguration. A coating thickness of 100 µm makes it possible to continue to use the components that have been used up to now, without the allowed tolerances being exceeded. With the use of a coating thickness of essentially 40 µm it is possible to apply a coating of adequate thickness to the mounting rail in a single work process so that an optimal compromise between durability and work effort can be made.

According to an exemplary embodiment of the invention, the coating material comprises an admixture material such that the admixture material acts as a coating reinforcement or layer be inforcement.

In this way it is possible to prevent the coating from being susceptible to external influences and damage.

According to an exemplary embodiment of the invention, the coating material comprises an admixture material such that the admixture material acts as a coating connection or layer connection.

In this way a connection between the coating and the mounting rail can be improved, and detachment of the coating, for example as a result of considerable mechanical or thermal loads, can be prevented.

According to an exemplary embodiment of the invention, the mounting rail comprises a longitudinal groove with a base that forms a bottom, wherein the longitudinal groove comprises a projection on each side along its longitudinal direction.

This geometric design makes it possible to achieve a countersunk installation in the floor region, wherein the projection of the groove prevents a slide, for example a fitting, which is located in the groove, on which slide a seat is attached, from becoming detached from the mounting rail when substantial mechanical loads are experienced, which detachment would constitute a considerable safety risk within the aircraft.

According to an exemplary embodiment of the invention, at least the bottom of the groove comprises the coating.

As a rule, the bottom of the groove is the region that is subjected to the greatest loads, in which region a fastening element or a fitting, for example in the form of a slide, glides.

According to an exemplary embodiment of the invention, the lateral walls of the groove comprise the coating.

Although the bottom of the groove is the region in which a slide of a particular embodiment essentially slides, by coating the lateral walls of the groove it is possible to achieve improved sliding characteristics, in particular if there is slight lateral tilting of the slide, so that the minimisation of friction, which has been achieved by way of the improved sliding characteristics on the bottom of the groove, can be further improved.

According to an exemplary embodiment of the invention, the projection comprises the coating on the face pointing towards the bottom of the groove.

In this way the friction-reducing effect can act even if there is some upwards-tilting of the fastening element or slide in the groove, for example when a seat or a seat row is pushed along relatively high up by the backrest so that the slides or fittings that are located in the direction of pushing push more strongly onto the bottom of the groove, while the slides located against the direction of pushing lift off from the bottom and press against the underside of the projection so that by means of coating the underside of the projection or the face of the projection that points towards the floor of the groove it is possible to achieve improved sliding characteristics of the elements to be mounted in the mounting rail.

According to an exemplary embodiment of the invention, the projection comprises the coating on a face pointing away from the bottom of the groove.

In this way it can be ensured that also slide elements that do not rest against the bottom of the groove but instead against the top of the projection, permit friction-reducing movement.

According to an exemplary embodiment of the invention, a method for coating a mounting rail installed in an aircraft is provided for mounting installations, wherein the method involves application of a coating material to the mounting rail and heat treatment of the coating material, wherein after heat treatment the coefficient of friction between the coating material and the material of an element to be mounted is less than the coefficient of friction between a material from which the mounting rail is made and a material of an element to be mounted.

Such a method also makes it possible to upgrade mounting rails that are already in place in an aircraft in such a way that the units (for example seats comprising fittings) to be fastened to the mounting rails can be moved more easily within the mounting rail, which considerably reduces the time required for configuring or reconfiguring a cabin space. In this way downtimes on the ground can be prevented so that an aircraft can be used more efficiently.

According to an exemplary embodiment of the invention, application involves a spraying process.

A spraying process makes possible an application that is as even as possible and a consistent coating thickness on the components of the mounting rails, which components are to be coated.

Of course, application of the coating material can also take place by applying the coating material in liquid form, for example by means of a paintbrush or by means of pouring, provided the installations position of the mounting rails allows this.

According to an exemplary embodiment of the invention, the spraying process takes place in two passes with intermediate drying. In this way even thicker coating thicknesses can be achieved.

According to an exemplary embodiment of the invention, this coating thickness is between 10 µm and 100 µm, preferably essentially 40 µm.

In this way an optimal coating thickness can be set which provides the best possible service life, is within specified tolerances, and comprises the smallest possible number of work steps.

According to an exemplary embodiment of the invention, the method comprises thermal cleaning of the mounting rail prior to application.

In this way it is possible to remove impurities and to improve adhesion of the coaling material to the mounting rail.

According to an exemplary embodiment, the method comprises mechanical cleaning and roughening by means of blasting, preferably with high-grade corundum, of the mounting rail before the application and after thermal cleaning.

ln this way adhesion of the coating on the mounting rail can be further improved.

According to an exemplary embodiment of the invention, the spraying process takes place essentially at cold temperatures.

In this way unnecessary evaporation can be prevented, and a coating material can be provided such that it can be thermally cured and does not prematurely cure during a spraying process.

According to an exemplary embodiment of the invention, heat treatment takes place at a local temperature of approximately 250 °C.

According to an exemplary embodiment of the invention, beat treatment is a sintering process.

By means of a sintering process it is possible to achieve relatively durable coatings and material applications.

According to an exemplary embodiment, there may be provided an aircraft seat mounting rail that is designed for mounting installations in an aircraft, wherein the aircraft seat mounting rail is designed to be arranged between a power supply and the interior equipment, wherein the aircraft seat mounting rail is at least in part coated with an electrically conductive coating material, wherein coating of the aircraft seat mounting rail is designed such that by way of it electrical energy can be transmitted from the power supply to the interior equipment.

This allows to provide a power connection or signal connection without the need to provide long cable trails in an aircraft. It should be noted that also a plurality of tracks may be provided. For example a plurality of condiuctive tracks on a seat rail being isolated to each other. By providing corresponding arrngements on the studs, also electrically separated connections may be provided between the rail and the stud which allow to control a plurality of signals or power levels independently.

According to an exemplary embodiment, there may be provided an aircraft seat mounting rail, wherein the aircraft seat mounting rail is designed such that by way of it data can be transmitted from an in-flight entertainment system to the interior equipment.

According to an exemplary embodiment, there may be provided an aircraft seat mounting rail, wherein the coating material comprises a fluorocarbon polymer.

According to an exemplary embodiment, there may be provided an aircraft seat mounting rail, wherein the coating material comprises polytetrafluoroethylene.

According to an exemplary embodiment, there may be provided an aircraft seat mounting rail, wherein the coating material comprises metal shavings or metal powder or carbon fibre to provide the electrical conductivity.

According to an exemplary embodiment, there may be provided an aircraft seat mounting rail, wherein the aircraft seat mounting rail is made from aluminium.

According to an exemplary embodiment, there may be provided an aircraft seat mounting rail, wherein the coating material comprises a coating thickness of between 10 µm and 100 µm.

It should be noted that the above features relating to the aircraft seat mounting rail may also be applied to a aircraft seat stud, wherein the respective portions of the rail are equivalently replaced by corresponding portions of the stud. Also the above method may be applied accordingly to the manufacturing of a stud.

It should be noted that it is also possible to combine individual characteristics of the characteristics stated above, in particular in relation to various coating surfaces, without moving away from the subject of the present invention.

These and other aspects of the present invention are explained and illustrated with reference to the embodiments described below.

### Brief description of the drawings

Bellow, exemplary embodiments of the invention are described with reference to the following drawings.
Fig. 1 shows a perspective view of a mounting rail according to an exemplary embodiment of the invention.
Fig. 2 shows a section view along a longitudinal axis of a mounting rail of an exemplary embodiment of the invention, which mounting rail comprises a coating of the bottom of a groove.
Fig. 3 shows a section view of a mounting rail of an exemplary embodiment of the invention, which mounting rail comprises a coating of the bottom of a groove.
Fig. 4 shows a section view of a mounting rail of an exemplary embodiment of the invention, which mounting rail comprises a coating of a pre-treated surface of a groove bottom.
Fig. 5 shows a section view or a mounting rail of an exemplary embodiment of the invention, which mounting rail comprises a coating of a lateral wall of a groove.
Fig. 6 shows a section view of a mounting rail of an exemplary embodiment of the invention, which mounting rail comprises a coating of an underside of a projection or a face of the projection, which face points towards the bottom of the groove.
Fig. 7 shows a section view of a mounting rail according to an exemplary embodiment of the invention, which mounting rail comprises a coating of the face of a projection, which face points away from the bottom of the groove.
Fig. 8 shows a flow chart of a method according to an exemplary embodiment of the invention.
Fig. 9 shows a diagrammatic view of an aircraft comprising an exemplary arrangement of a mounting rail according to an exemplary embodiment of the invention.

### Detailed description of exemplary embodiments

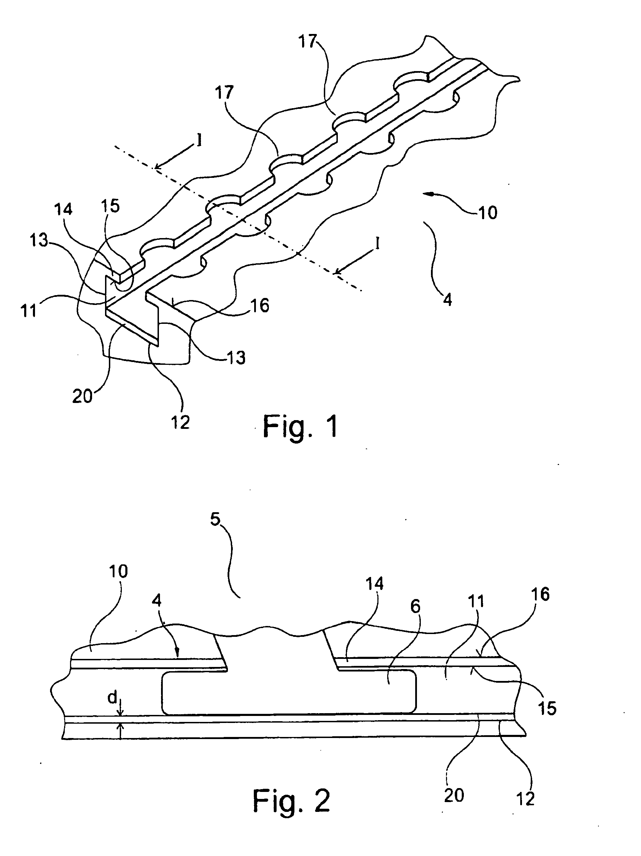

Fig. 1 shows a mounting rail according to an exemplary embodiment of the invention. The mounting rail 10 comprises an elongated longitudinal groove 11, wherein the longitudinal groove comprises a bottom 12, on each side a lateral part 13 and a projection 14 which at the end of the lateral parts 13 project beyond the longitudinal groove 11 above the bottom 12. In this arrangement the projection 14 comprises a face 15 pointing towards the bottom 12, and a face 16 pointing away from the bottom. The projection can comprise recesses 17 at regular spacings, which recesses 17 are used to fasten a slide or fastening element, which is movable in the longitudinal groove 11, at a particular position at particular grid spacing, wherein the grid dimension is determined hy the distance between the recesses 17. In this arrangement the mounting rail 10 is in or on a floor region 4 of an aircraft 1. Such mounting rails are predominantly used to fasten, for example, seats or seat units in a passenger cabin, wherein as a rule the mounting trail is arranged in the floor region 4 of the aeroplane or of the aircraft such that the face 16 of the projection 14, which face 16 points away from the bottom 12, is essentially flush with the walking surface of the cabin floor.

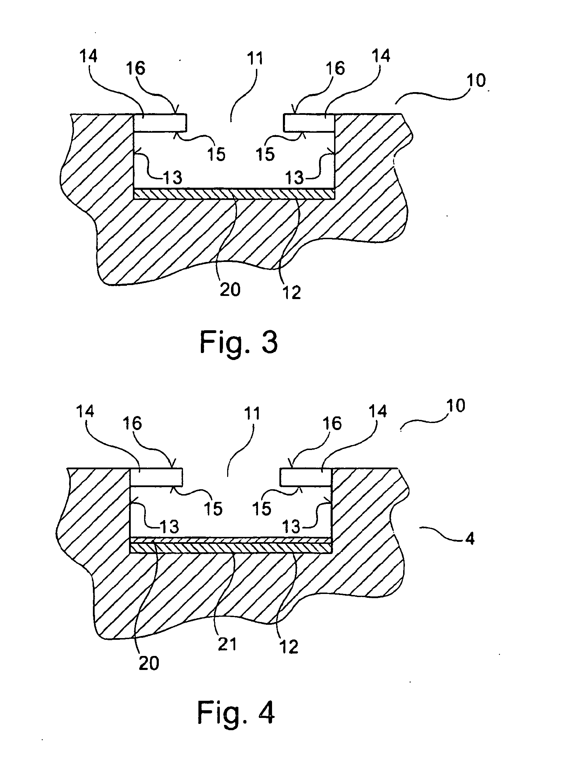

The section views shown in Figs 3, 4, 5, 6 and 7 relate to section 1-1 indicated in Fig. 1.

According to an exemplary embodiment of the invention, the mounting rail 10 is at least partly coated with a coating 20 which makes it possible for a slide or fastening element (fitting) 6 to be displaced more easily in the longitudinal groove 11. in particular by reducing the coefficient of friction. In other words, the coating 20 has a lower coefficient of friction in relation to an element to he moved than the coefficient of friction which the material of the mounting rail 10 would have in relation to the element 6 to be moved in the longitudinal groove.

Fig. 2 shows a longitudinal section of a mounting rail 10 according to an exemplary embodiment of the invention. The top edge of the mounting rail 10, which corresponds to the face 16 of the projection 14, which face 16 points away from the bottom 12, is essentially flush with the walking surface of the cabin floor 4. A slide-or fastening element 6, which in aircraft engineering is referred to as a fitting, for example of a seat or a seat unit 5, runs in the longitudinal groove 11 of the mounting rail 10. A coating 20 has been applied at a certain coating thickness d to the bottom 12 of the mounting rail 10, wherein the coating 20 has a lower coefficient of friction in relation to the material of the slide 6 than the coefficient of friction which the material of the mounting rail 10 would have in relation to the slide 6. For reasons of weight, the mounting rail as such is, as a rule, made from an aluminium alloy or from aluminium, as are the fastening elements or slides 6 for fastening installations in an aircraft. The coefficient of friction of two aluminium surfaces placed against each other is relatively high, so that, if it is possible at all, an installation comprising an aluminium slide 6 can only be displaced in an aluminium mounting rail 10 with very considerable force being exerted. For this reason it has, up to now, often been necessary to lift the installation with the slide 6 out of the mounting rail 10, and to then carry said installation to the desired new position, wherein, as a rule, this process required several employees. By reducing the coefficient of friction by means of a corresponding coating, an installation element can now, by means of the slide 6, more easily be slid along in the mounting rail 10, for example by just one employee, so that a much faster change between the various installation positions is possible. This is necessary, in particular, when configuring or reconfiguring the passenger cabin of an aircraft. It should be noted that, up to now, minor reconfiguration of the cabin of a commercial aircraft has taken a complete working day, while extensive reconfiguration of an aircraft cabin has taken up to an entire working wees. A large part of this time needed to be expended on the movement and positional change of the components. The projection, 14 prevents the elements to be installed, and thus the slide 6, from moving out of the mounting rail in the case of strong deceleration- or acceleration manoeuvres of the aircraft, and ensures that said elements and thus the slide 6 are firmly held in the mounting rail.

According to an exemplary embodiment of the invention, the coating 20 is applied to the bottom 12 of the longitudinal groove 11 of the mounting rail 10. The bottom 12 is the region of the mounting rail 10 or of the longitudinal groove 11, which region, during normal load acting on the installations, accommodates the forces of the slide 6 by way of the positioning surface. Consequently, when the slide 6 is slid alone the elongated groove 11, the greatest friction forces are experienced at the bottom of the groove, which friction forces can then be reduced by a corresponding coating 20.

The coating 20 can also be applied in several coatings, wherein a certain period of intermediate drying can then be provided, in order to achieve a greater coating thickness d.

Fig. 4 shows an exemplary embodiment of the invention, in which a two-layer coating can be provided. A two-tayer coating can, for example, be necessary in cases where the coating material of the coating 20 cannot be applied, or can be applied only very poorly, to the material of the mounting rail 10, in particular if the materials used are not compatible with each other. In this case an intermediate coating 21 may be necessary, which is selected such that it can be applied so that it durably adheres to the material of the mounting rail 10, in the example of Fig. 4 to the bottom 12 of the mounting rail 10, and is also compatible with the coating material of the coating 20 so that the intermediate coating 21 acts as connection coating between the coating 20 and the bottom 12 of the mounting rail. It should be noted that the coating material can also comprise an additive so as to ensure compatibility between the coating 20 and the bottom 12 of the mounting rail 10. In this case no three-dimensional intermediate coating 21 is necessary, because admixing a corresponding additive ensures good durability of the coating 20 on the mounting rail, in particular on the bottom 12 of the mounting rail 10.

It should be noted that Fig. 4 diagrammatically can represent either a two-layer coating using the same coating material, or a coating with an intermediate coating of an adhesion-improving coating or layer.

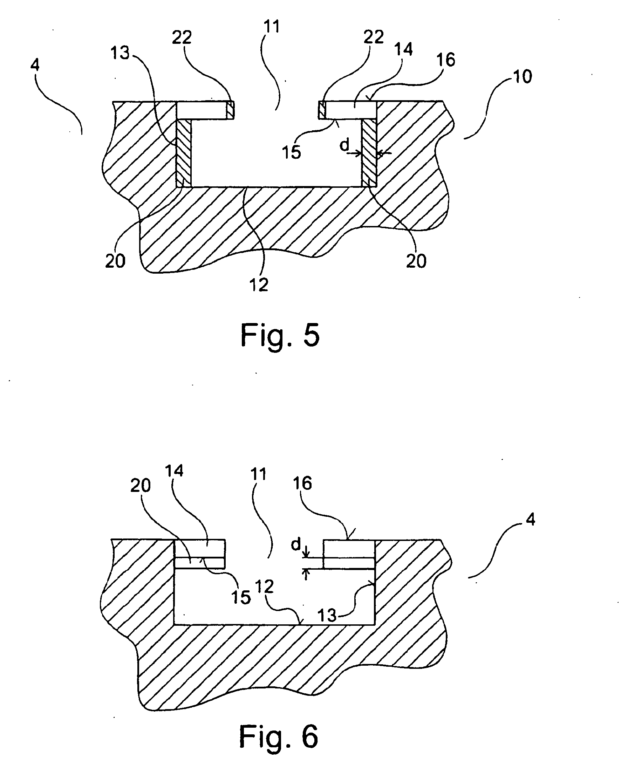

Fig. 5 shows an exemplary embodiment of the invention, in which a coating 20 is applied to the lateral surfaces 13 of the mounting rail 10. Although Fig. 5 only shows a coating on the lateral walls 13, it is understood that the bottom 12 can, of course, at the same time be provided with such a coating, which for the sake of clarity is, however, not shown in Fig. 5. Lateral coating is in particular advantageous in cases where the slide 6 (not shown in the diagram) is likely to laterally tilt in the longitudinal groove 11 of the mounting rail 10 so that friction force between the sides of the slide 6 and the sides of the mounting rail 10 are also to be expected. Such lateral coating can not only take place on the lateral parts 13 of the mounting rail 10, but also on the faces of the projection 14 when the slide 6 (not shown) does not contact the lateral walls of the groove 11 at the base, but instead when guiding of the slide takes place at the face edges of the projection 14. Such a coating is shown with reference character.22. It should be noted that the invention covers embodiments in which a coating can be provided on the lateral parts 13, the faces of the projection 14, and on both surfaces of the lateral parts 13 and the projection 14.

Fig. 6 shows an exemplary embodiment of the invention in which a coating 20 has been applied to the face 15 of the projection 14, which face 15 points towards the bottom 12 of the longitudinal groove 11. In the embodiment shown in Fig. 6, too, additionally a coating on the sides 13 and on the bottom 12 can be provided, which for the sake of clarity is, however, not shown in the drawing. A coating on the face 15 of the projection 14. which face 15 points towards the bottom 12. is in particular advantageous in cases where the slides 6 that are located on the face that points against the direction of sliding tend to lift when the cabin equipment 5 is slid along, thus pushing against the underside of the projection 14 so that at this position, too, a friction-reducing coating 20 ensures better slidability of a slide (not shown) in the longitudinal groove 11.

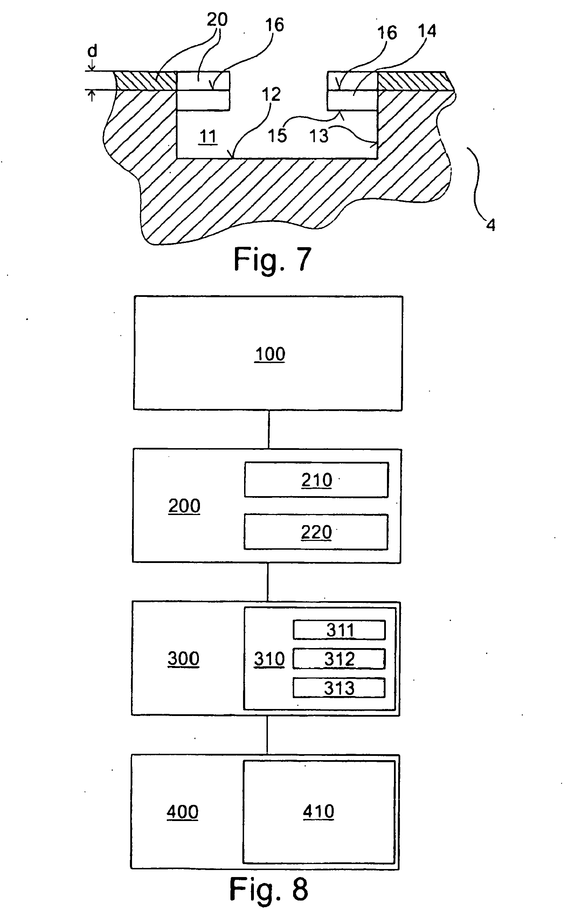

Fig. 7 shows a further exemplary embodiment of the invention in which a coating on the face 16 of the projection 14, which face 16 points away from the bottom 12 of the longitudinal groove 11, is provided. In the embodiment shown in Fig. 7, too, in addition to this coating, a coating on the lateral parts 13, the bottom 12 or the undersides 15 of the projections 14 and on their faces can be provided, which coating, for the sake of clarity, is, however, not shown in the drawing. Coating provided on the face 16 of the projection 14, which face 16 points away from the bottom 12, is advantageous if a slide essentially rests on the surface 16 and if there is no resting force or only a slight resting force acting on the bottom of the longitudinal groove 11.

Fig. 8. shows a flow chart of a method according to an exemplary embodiment of the invention related to an aircraft seat mounting rail and an aircraft seat stud. The method shown according to the exemplary embodiment involves thermal cleaning 100 at high temperature, wherein thermal cleaning can be carried out either by means of hot air or by means of an open flame. In this process it must be ensured that the surroundings of the mounting rail, in particular in the already mounted state, for example in the passenger cabin of an aircraft, are not negatively affected by the thermal treatment.
In a subsequent step, according to an exemplary embodiment, mechanical pretreatment 200 can take place, which can, for example, comprise mechanical cleaning 210 and roughening 220, wherein roughening can, for example, take place by blasting, for example with the use of high-grade corundum.

Subsequently, according to an exemplary embodiment of the invention, application 300 of the coating material takes place, wherein the application can comprise a spraying process 310 which in turn can comprise several steps. In this process, for example in a first spraying pass 311, the coating material can be applied to the mounting rail 10 or seat stud, subsequently intermediate drying 312 can take place, followed by the application of a further coating of the coating material in a second spraying pass 313.

Intermediate drying can take place either by exposure to air and/or by the supply of external heat.

Subsequently, according to the exemplary embodiment, heat treatment 400 takes place, which leads to curing of the coating material. In this process the step of intermediate drying 312 can have the same function or a similar function as is the case with the heat treatment 400. The heat treatment 400 can also involve a sintering process 410 in which certain microstructural charges in the coating material can occur.

Such a process can, for example, occur in that the mounting rail or a seat rail or a seat stud is thermally cleaned overnight in a chamber oven at 300 °C. Subsequently, a blasting process with high-grade corundum takes place, in which process any deposits are removed from the regions to be coated, with said regions being lightly roughened. Subsequent application of the coating material takes place, for example, in a cold spraying process in two passes with intermediate drying, wherein the coating thicknesses can be between 10 µm and 100 µm, for example 40 µm. Subsequently, the coating can be sintered on at approximately 250 °C in a chamber oven. This is followed by final inspection relating to coating thickness, roughness and visual appearance.

It should be noted that the present invention is not limited to these specific temperatures and to all the steps described, but instead is defined by the subject of the claims. In particular, it is possible to do without the cleaning steps if the nature of the material is already adequate.

The corresponding steps of the method can also be modified such that subsequent coating of already installed mounting rails can take place in an aircraft cabin, for example as part of a retrofit or refurbishment of an aircraft. Depending on the frequency at which reconfigurations need to be carried out, retrofitting and aftertreatment of already installed mounting rails are worthwhile because, overall, time savings can be expected.

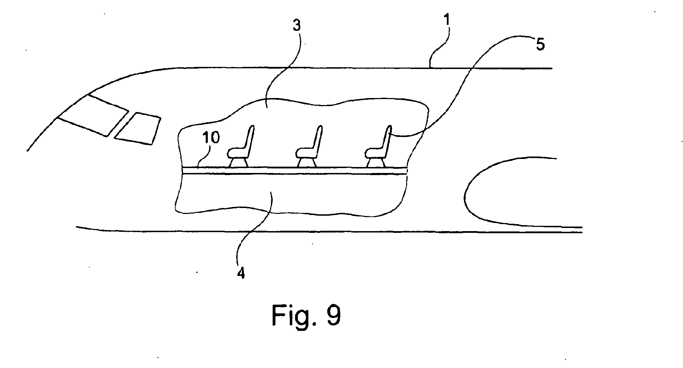

Fig. 9 shows an exemplary embodiment of the invention, in which an aircraft 1 comprising a mounting rail 10 and/or a seat stud according to the invention is provided. In this arrangement the mounting rail 10 is provided in the floor region 4 of a passenger cabin. Of course, it is also imaginable for such mounting rails to be provided for installations in the hold, i.e. the freight compartment, or in other regions of an aircraft where frequent reconfiguration (for-example of baggage compartments) is expected. In the embodiment shown in Fig. 9 a plurality of installations, in the case depicted these are seat units 5, are fastened to the mounting rail 10. Of course, other installations, such as galleys or sanitary installations, can be fastened in the cabin space 3 to a mounting rail 10 according to the invention. It should be noted that Fig. 9 merely provides a diagrammatic view, wherein in reality the proportions may vary.

The invention results in a drastic reduction in the initial configuration time or the reconfiguration time for an aircraft. For example, when the cabin is furnished with seats or seat units, the seat units can be placed directly into the coated mounting rail or seat rail where they can be placed to their positions without major expenditure of force, in particular if due to the lack of space there is no possibility of removing or placing seat units in the middle, as a result of which it becomes necessary to slide all the other seat units. Subsequently, the seats can be moved, on the coated mounting rail, into their positions where they are fastened to the mounting rail without this requiring a renewed change in the position of the seats. Furthermore, the invention makes it possible to use the existing seat fittings or seat fasteners and to leave the basic geometric design of the seat rails or of the mounting rails unchanged. Furthermore, no significant additional weight is to be expected as a result of the coating because the coating is relatively thin.

It should be noted that a mounting rail and seat stud according to the invention can also be used in other vehicles, for example in ships, trains or buses were the problem is similar, i.e. where against the background of fast configurability and possibly restricted space, sliding of a large number of installation components is required.

In addition, it should be pointed out that the term "comprising" does not exclude other elements or processes, and that, likewise, "a" or "an" does not exclude a plural number. Elements that have been described in the context of various embodiments can also be combined without leaving the subject of the present invention.

It should be pointed out that the reference characters in the claims are not to be interpreted as limitations relating to the protective scope of the claims.

## Claims

1. An aircraft seat mounting rail that is designed for mounting installations in an aircraft, wherein the mounting rail (10) is at least in part coated with a coating (20) made of a coating material, wherein the coefficient of friction between the coating material and a material of an element to be mounted is lower than the coefficient of friction between a material from which the non-coated mounting rail is made and a material of an element to be mounted.

2. The aircraft seat mounting rail of claim 1. wherein the aircraft seat mounting rail comprises a longitudinal groove (11) with a base that forms a bottom (12), wherein the longitudinal groove (11) comprises a projection (14) on each side along its longitudinal direction.

3. The aircraft seat mounting rail of claim 2, wherein the projection (14) comprises the coating (20) on a face (15) pointing towards the bottom (12) of the longitudinal groove (11).

4. The aircraft seat mounting rail of claim 2, wherein the projection (14) comprises the coating (20) on a face (16) pointing away from the bottom (12) of the longitudinal groove (11).

5. An aircraft seat stud that is designed for mounting installations in an aircraft, wherein the aircraft seat stud is at least in part coated with a coating (20) made of a coating material, wherein the coefficient of friction between the coating material and a material of an element to be mounted on is lower than the coefficient of friction between a material from which the non-coated aircraft seat stud is made and a material of an element to be mounted on.

6. The aircraft seat stud of claim 5, wherein at least a bearing face comprises the coating (20).

7. The device of any one of the preceding claims, wherein the coating material comprises a binding resin.

8. The device of any one of the preceding claims, wherein the coating material comprises an admixture material such that the admixture material acts as a coating reinforcement.

9. The device of any one of the preceding claims, wherein the coating material comprises an admixture material such that the admixture material acts as a layer connection or coating connection.

10. An aircraft seat mounting rail that is designed for mounting installations in an aircraft;
wherein the aircraft seat mounting rail is designed to be arranged between a power supply and the interior equipment;
wherein the aircraft seat mounting rail is at least in part coated with an electrically conductive coating material;
wherein the coating of the aircraft seat mounting rail is designed such that by way of it electrical energy can be transmitted from the power supply to the interior equipment.

11. An aircraft seat stud that is designed for mounting installations in an aircraft;
wherein the aircraft seat stud is designed to be arranged between a power supply and the interior equipment;
wherein the aircraft seat stud is at least in part coated with an electrically conductive coating material;
wherein coating of the aircraft seat stud is designed such that by way of it electrical energy can be transmitted from the power supply to the interior equipment.

12. The device of any of claims 10 and 11:
wherein the coating material comprises metal shavings or metal powder or carbon fibre to provide the electrical conductivity.

13. A method for coating an aircraft seat mounting rail (10) installed in an aircraft (1), for mounting installations (5), or an aircraft seat stud with the method involving
application (300) of a coating material to the aircraft seat mounting rail (10) or aircraft seat stud; and
heat treatment (400) of the coating material,
wherein after heat treatment (400) the coefficient of friction between the coating material and the material of an element to be mounted is less than the coefficient of friction between a material from which the aircraft seat mounting rail or aircraft seat stud is made and a material of an element to be mounted.

14. A method for coating an aircraft seat mounting rail or a aircraft seat stud that is designed for mounting interior equipment in an aircraft;
wherein the aircraft seat mounting rail or aircraft seat stud is designed to be arranged between a power supply and the interior equipment, with the method comprising the followings steps:
thermal cleaning of the aircraft seat mounting rail or aircraft seat stud by heating;
mechanical cleaning and roughening of the aircraft seat mounting rail or aircraft seat stud;
applying a coating material to the aircraft seat mounting rail or aircraft seat stud; and heating the coating material;
wherein after heating of the coating the electrical conductivity of the aircraft seat mounting rail or aircraft seat stud is such that by way of it electrical energy can be transmitted from the power supply to the interior equipment.

15. The method of any of claims 13 and 14, wherein the application (300) involves a spraying process (310).

16. The method of any of claims 13 to 15, wherein the spraying process (310) takes place in two spraying passes (311, 313) with intermediate drying (312).

17. The method of any of claims 13 to 16. wherein the spraying process (310) takes place essentially at cold temperatures.

18. The method of any of claims 13 to 17, wherein heat treatment (400) involves a sintering process (410).

19. An aircraft comprising a aircraft seat mounting rail of any one of claims 1 to 4, 7 to 10 and 12. wherein the aircraft seat mounting rail is arranged in the floor region of a passenger cabin such that seat elements can be fastened to the aircraft seat mounting rail.

20. The aircraft of claim 19; wherein the aircraft seat mounting rail can be fastened to the fuselage of the aircraft in an electrically conductive manner such that in the case of static charge, electric charges can discharge from the aircraft seat mounting rail.

## Patentansprüche

1. Luftfahrzeugsitz- Montageschiene, die für die Montage von Einbauten in einem Luftfahrzeug ausgelegt ist, wobei die Montageschiene (10) wenigstens teilweise mit einer Beschichtung (20) aus einem Beschichtungsmaterial beschichtet ist, wobei der Reibungskoeffizient zwischen dem Beschichtungsmaterial und einem Material eines zu montierenden Elementes geringer ist als der Reibungskoeffizient zwischen einem Material, aus dem die unbeschichtete Montageschiene hergestellt ist, und einem Material eines zu montierenden Elementes.

2. Luftfahrzeugsitz- Montageschiene nach Anspruch 1, wobei der Luftfahrzeugsitz eine Längsnut (11) mit einer einen Boden (12) bildenden Basis aufweist, wobei die Längsnut (11) entlang ihrer Längsrichtung beidseitig eine Überkragung (14) aufweist.

3. Luftfahrzeugsitz- Montageschiene nach Anspruch 2, wobei die Überkragung (14) die Beschichtung (20) auf einer dem Boden (12) der Längsnut (11) zugewandten Seite (15) aufweist.

4. Luftfahrzeugsitz- Montageschiene nach Anspruch 2, wobei die Überkragung (14) die Beschichtung (20) auf einer dem Boden (12) der Längsnut (11) abgewandten Seite (16) aufweist.

5. Luftfahrzeugsitz- Fuß, der für die Montage von Einbauten in einem Luftfahrzeug ausgelegt ist, wobei der Luftfahrzeugsitz- Fuß wenigstens teilweise mit einer Beschichtung (20) aus einem Beschichtungsmaterial beschichtet ist, wobei der Reibungskoeffizient zwischen dem Beschichtungsmaterial und einem Material eines zu montierenden Elementes geringer ist als der Reibungskoeffizient zwischen einem Material, aus dem der unbeschichtete Luftfahrzeugsitz- Fuß besteht, und einem Material eines zu montierenden Elementes.

6. Luftfahrzeugsitz- Fuß nach Anspruch 5, wobei wenigstens die Auflagefläche die Beschichtung (20) aufweist.

7. Vorrichtung nach einem der vorangegangenen Ansprüche, wobei das Beschichtungsmaterial ein Bindeharz enthält.

8. Vorrichtung nach einem der vorangegangenen Ansprüche, wobei das Beschichtungsmaterial ein Beimischungsmaterial derart aufweist, dass das Beimischungsmaterial als Schichtverstärkung wirkt.

9. Vorrichtung nach einem der vorangegangenen Ansprüche, wobei das Beschichtungsmaterial ein Beimischungsmaterial derart aufweist, dass das Beimischungsmaterial als Schichtverbindung oder Beschichtungsverbindung wirkt.

10. Luftfahrzeugsitz- Montageschiene, die für die Montage von Einbauten in einem Luftfahrzeug ausgestaltet ist ;
wobei die Luftfahrzeugsitz- Montageschiene ausgestaltet ist, zwischen einer Stromversorgung und der Inneneinrichtung angeordnet zu sein;
wobei die Luftfahrzeugsitz- Montageschiene wenigstens teilweise mit einem elektrisch leitendem Beschichtungsmaterial beschichtet ist;
wobei die Beschichtung der Luftfahrzeugsitz- Montageschiene derart ausgestaltet ist, dass darüber elektrische Energie von der Stromversorgung zur Inneneinrichtung weiterleitbar ist.

11. Luftfahrzeugsitz- Fuß, der für die Montage von Einbauten in einem Luftfahrzeug ausgestaltet ist;
wobei der Luftfahrzeugsitz- Fuß ausgestaltet ist, zwischen einer Stromversorgung und der Inneneinrichtung angeordnet zu sein;
wobei der Luftfahrzeugsitz- Fuß wenigstens teilweise mit einem elektrisch leitendem Beschichtungsmaterial beschichtet ist;
wobei die Beschichtung des Luftfahrzeugsitz- Fußes derart ausgestaltet ist, dass darüber elektrische Energie von der Stromversorgung zur Inneneinrichtung weiterleitbar ist.

12. Vorrichtung nach einem der Ansprüche 10 oder 11;
wobei das Beschichtungsmaterial Metallspäne oder Metallpulver oder Kohlefaser aufweist, um elektrische Leitfähigkeit bereitzustellen.

13. Verfahren zum Beschichten einer in einem Luftfahrzeug zur Montage von Einbauten montierten Luftfahrzeugsitz- Montageschiene (10) oder eines Luftfahrzeugsitz- Fußes, wobei das Verfahren folgende Verfahrensschritte umfasst:
Applizieren eines Beschichtungsmaterials auf der Luftfahrzeugsitz-Montageschiene (10) oder dem Luftfahrzeugsitz- Fuß; und
Wärmebehandlung (400) des Beschichtungsmaterials;
wobei nach der Wärmebehandlung (400) der Reibungskoeffizient zwischen dem Beschichtungsmaterial und einem Material eines zu montierenden Elementes geringer ist als der Reibungskoeffizient zwischen einem Material, aus dem die Luftfahrzeugsitz-Montageschiene oder der Luftfahrzeugsitz- Fuß hergestellt ist, und einem Material eines zu montierenden Elementes.

14. Verfahren zum Beschichten einer Luftfahrzeugsitz- Montageschiene (10) oder eines Luftfahrzeugsitz- Fußes, der für die Montage von einer Inneneinrichtung in einem Luftfahrzeug ausgestaltet ist;
wobei die Luftfahrzeugsitz- Montageschiene oder der Luftfahrzeugsitz- Fuß ausgestaltet ist, zwischen einer Stromversorgung und der Inneneinrichtung angeordnet zu sein, wobei das Verfahren folgende Schritte umfasst:
thermisches Reinigen der Luftfahrzeugsitz- Montageschiene oder des Luftfahrzeugsitz- Fußes durch Erwärmung;
mechanisches Reinigen und Aufrauen der Luftfahrzeugsitz- Montageschiene und des Luftfahrzeugsitz- Fußes;
Applizieren eines Beschichtungsmaterials auf der Luftfahrzeugsitz-Montageschiene oder dem Luftfahrzeugsitz- Fuß und Erhitzen des Beschichtungsmaterials,
wobei nach der Erwärmung des Beschichtungsmaterials die elektrische Leitfähigkeit der Luftfahrzeugsitz-Montageschiene oder des Luftfahrzeugsitz- Fußes derart ist, dass darüber elektrische Energie von der Stromversorgung zur Inneneinrichtung übertragen werden kann.

15. Verfahren nach Anspruch 13 und 14, wobei das Applizieren (300) einen Spritzprozess (310) umfasst.

16. Verfahren nach Anspruch 13 bis 15, wobei der Spritzprozess (310) in zwei Spritzschritten (311, 313) mit einer Zwischentrocknung (312) erfolgt.

17. Verfahren nach einem der Ansprüche 13 bis 16, wobei der Spritzprozess (310) im Wesentlichen bei kalten Temperaturen erfolgt.

18. Verfahren nach einem der Ansprüche 13 bis 17, wobei das Wärmebehandeln (400) einen Sinterprozess (410) umfasst.

19. Luftfahrzeug umfassend eine Luftfahrzeugsitz- Montageschiene nach einem der Ansprüche 1 bis 4, 7 bis 10 und 12, wobei die Luftfahrzeugsitz- Montageschiene in einem Bodenbereich einer Passagierkabine derart angeordnet ist, dass an der Luftfahrzeugsitz-Montageschiene Sitzelemente befestigbar sind.

20. Luftfahrzeug nach Anspruch 19, wobei die Luftfahrzeugsitz- Montageschiene an den Rumpf des Luftfahrzeuges auf eine elektrisch leitende Weise derart befestigbar ist, dass im Falle einer statischen Ladung elektrische Ladungen von der Luftfahrzeugsitz-Montageschiene ableitbar sind.

## Revendications

1. Rail de montage de siège d'avion qui est conçu pour des installations de montage dans un avion, le rail de montage (10) étant au moins en partie revêtu d'un revêtement (20) fait d'un matériau de revêtement, dans lequel le coefficient de frottement entre le matériau de revêtement et un matériau d'un élément à monter est inférieur au coefficient de frottement entre un matériau dont le rail de montage non revêtu est fait et un matériau d'un élément à monter.

2. Rail de montage de siège d'avion selon la revendication 1, le rail de montage de siège d'avion comportant une rainure longitudinale (11) avec une base qui forme un fond (12), dans lequel la rainure longitudinale (11) comporte une saillie (14) de chaque côté le long de sa direction longitudinale.

3. Rail de montage de siège d'avion selon la revendication 2, dans lequel la saillie (14) comporte le revêtement (20) sur une face (15) pointant vers le fond (12) de la rainure longitudinale (11).

4. Rail de montage de siège d'avion selon la revendication 2, dans lequel la saillie (14) comporte le revêtement (20) sur une face (16) pointant en s'éloignant du fond (12) de la rainure longitudinale (11).

5. Goujon de siège d'avion qui est conçu pour des installations de montage dans un avion, le goujon de siège d'avion étant au moins en partie revêtu d'un revêtement (20) fait d'un matériau de revêtement, dans lequel le coefficient de frottement entre le matériau de revêtement et un matériau d'un élément à monter est inférieur au coefficient de frottement entre un matériau dont le goujon de siège d'avion non revêtu est fait et un matériau d'un élément à monter.

6. Goujon de siège d'avion selon la revendication 5, dans lequel au moins une face d'appui comporte le revêtement (20).

7. Dispositif selon l'une quelconque des revendications précédentes, dans lequel le matériau de revêtement comporte une résine de liaison.

8. Dispositif selon l'une quelconque des revendications précédentes, dans lequel le matériau de revêtement comporte un matériau additif de telle sorte que le matériau additif agit comme un renfort de revêtement.

9. Dispositif selon l'une quelconque des revendications précédentes, dans lequel le matériau de revêtement comporte un matériau additif de telle sorte que le matériau additif agit comme une liaison de couches ou une liaison de revêtements.

10. Rail de montage de siège d'avion qui est conçu pour des installations de montage dans un avion,
dans lequel le rail de montage de siège d'avion est conçu pour être agencé entre une alimentation en courant et l'équipement intérieur,
dans lequel le rail de montage de siège d'avion est au moins en partie revêtu d'un matériau de revêtement électriquement conducteur,
dans lequel le revêtement du rail de montage de siège d'avion est conçu de telle sorte qu'au moyen de celui-ci, de l'énergie électrique peut être transmise de l'alimentation en courant à l'équipement intérieur.

11. Goujon de siège d'avion qui est conçu pour des installations de montage dans un avion,
dans lequel le goujon de siège d'avion est conçu pour être agencé entre une alimentation en courant et l'équipement intérieur,
dans lequel le goujon de siège d'avion est au moins en partie revêtu d'un matériau de revêtement électriquement conducteur,
dans lequel le revêtement du goujon de siège d'avion est conçu de telle sorte qu'au moyen de celui-ci, de l'énergie électrique peut être transmise de l'alimentation en courant à l'équipement intérieur.

12. Dispositif selon l'une quelconque des revendications 10 et 11,
dans lequel le matériau de revêtement comporte des arasages de métal ou une poudre de métal ou de la fibre de carbone pour assurer la conductivité électrique.

13. Procédé pour revêtir un rail de montage de siège d'avion (10) installé dans un avion (1), pour des installations de montage (5), ou un goujon de siège d'avion en utilisant le procédé impliquant :
l'application (300) d'un matériau de revêtement sur le rail de montage de siège d'avion (10) ou le goujon de siège d'avion, et
le traitement thermique (400) du matériau de revêtement,
dans lequel, après le traitement thermique (400), le coefficient de frottement entre le matériau de revêtement et le matériau d'un élément à monter est inférieur au coefficient de frottement entre un matériau dont le rail de montage de siège d'avion ou le goujon de siège d'avion est fait, et un matériau d'un élément à monter.

14. Procédé pour revêtir un rail de montage de siège d'avion ou un goujon de siège d'avion qui est conçu pour monter un équipement intérieur dans un avion,
dans lequel le rail de montage de siège d'avion ou le goujon de siège d'avion est conçu pour être agencé entre une alimentation en courant et l'équipement intérieur, en utilisant le procédé comportant les étapes suivantes consistant à :
nettoyer thermiquement le rail de montage de siège d'avion ou le goujon de siège d'avion par chauffage,
nettoyer mécaniquement et rugosifier le rail de montage de siège d'avion ou le goujon de siège d'avion,
appliquer un matériau de revêtement sur le rail de montage de siège d'avion ou le goujon de siège d'avion, et
chauffer le matériau de revêtement,
dans lequel, après le chauffage du revêtement, la conductivité électrique du rail de montage de siège avion ou du goujon de siège d'avion est telle qu'au moyen de celui-ci, de l'énergie électrique peut être transmise de l'alimentation en courant à l'équipement intérieur.

15. Procédé selon l'une quelconque des revendications 13 et 14, dans lequel l'application (300) implique un processus de pulvérisation (310).

16. Procédé selon l'une quelconque des revendications 13 à 15, dans lequel le processus de pulvérisation (310) a eu lieu en deux passes de pulvérisation (311, 313) avec un séchage intermédiaire (312).

17. Procédé selon l'une quelconque des revendications 13 à 16, dans lequel le processus de pulvérisation (310) a essentiellement lieu à des températures froides.

18. Procédé selon l'une quelconque des revendications 13 à 17, dans lequel le traitement thermique (400) implique un processus de frittage (410).

19. Avion comportant un rail de montage de siège d'avion selon l'une quelconque des revendications 1 à 4, 7 à 10 et 12, dans lequel le rail de montage de siège d'avion est agencé dans la zone de plancher d'une cabine de passagers de telle sorte que des éléments de siège peuvent être fixés au rail de montage de siège d'avion.

20. Avion selon la revendication 19, dans lequel le rail de montage de siège d'avion peut être fixé au fuselage de l'avion de manière électriquement conductrice de telle sorte que, en cas de charge statique, des charges électriques peuvent se décharger à partir du rail de montage de siège d'avion.
